# EUROPÄISCHE PATENTANMELDUNG

(11) **EP 1 626 254 A2**
(43) Veröffentlichungstag der Anmeldung: **15.02.2006**
(21) Anmeldenummer: 05017184.2
(22) Anmeldetag: 08.08.2005
(51) Int. Cl.: G01D 11/10

(54) **Drehgeber**

(30) Priorität: 13.08.2004 DE 102004040244
(71) Anmelder: Hübner Elektromaschinen GmbH, 10967 Berlin (DE)
(72) Erfinder: Otto, Kai-Hans, 12526 Berlin (DE); Lablack, Edgar, 10967 Berlin (DE)
(74) Vertreter: Grünecker, Kinkeldey, Stockmair & Schwanhäusser Anwaltssozietät

(57) **Zusammenfassung**

Bei einem Drehgeber mit einer Hohlwelle (4) umschließt die Hohlwelle (4) ein Koppelglied (12) zum Verbinden der Hohlwelle (4) mit der zu überwachenden Welle (2). Das Koppelglied (12) ist mittels elastischer, integrale Schockabsorber bildender Ringscheiben (14, 15) mit der Hohlwelle (4) verbunden.

## Beschreibung

Die Erfindung betrifft einen Drehgeber mit einer Hohlwelle, die drehbar in einem Gehäuse gelagert ist, in dem ein Abtastkopf und eine mit der Hohlwelle verbundene Inkrementalscheibe angeordnet sind, sowie mit einem von der Hohlwelle umschlossenen Koppelglied, durch das die Hohlwelle mit einer zu überwachenden Welle verbindbar ist.

Bei einem aus der EP 0 682 229 A1 bekannten Drehgeber der vorstehenden Art umschließt die Hohlwelle ein Koppelglied, das als eine an ihrem einen Ende mit zungenförmigen Spannbacken versehene Klemmbuchse ausgebildet ist. Das Koppelglied dient dazu, die Hohlwelle drehfest mit der zu überwachenden Welle zu verbinden. Die bekannte Konstruktion vermag insofern nicht voll zu befriedigen, als bei ihr in Fällen, in denen Wellen von Motoren oder Maschinen überwacht werden sollen, die mit als Scheibenbremsen ausgebildeten Stillstandsbremsen ausgestattet sind, beim Bremsvorgang Schocks entstehen, die zu Beschädigungen des Gebers führen können.

Der Erfindung liegt die Aufgabe zugrunde, einen Drehgeber der in Betracht gezogenen Art zu schaffen, der über eine große Schockresistenz verfügt. Gelöst wird diese Aufgabe erfindungsgemäß dadurch, dass die Hohlwelle das von ihr umschlossene Koppelglied mit Spiel umschließt und dass Stimflächen der Hohlwelle und des Koppelgliedes über in Richtung der Längsachse des Koppelgliedes federelastische Ringscheiben miteinander verbunden sind. Der erfindungsgemäße Drehgeber bietet den Vorteil, dass er mit einem integralen Schockabsorber versehen ist, der wenig Platz beansprucht und über einen einfachen und kostengünstigen Aufbau verfügt.

Weitere Merkmale und Einzelheiten der Erfindung ergeben sich aus den Unteransprüchen und der nachstehenden Beschreibung einer Ausführungsform der Erfindung und mehrerer Modifikationsmöglichkeiten. Es zeigen:
- Fig. 1: schematisch die maßgeblichen Teile eines Drehgebers nach der Erfindung im Schnitt und
- Fig. 2-4: mögliche Ausführungsformen der zum Schutz gegen Schockbelastungen des in Figur 1 dargestellten Drehgebers dienenden Mittel.

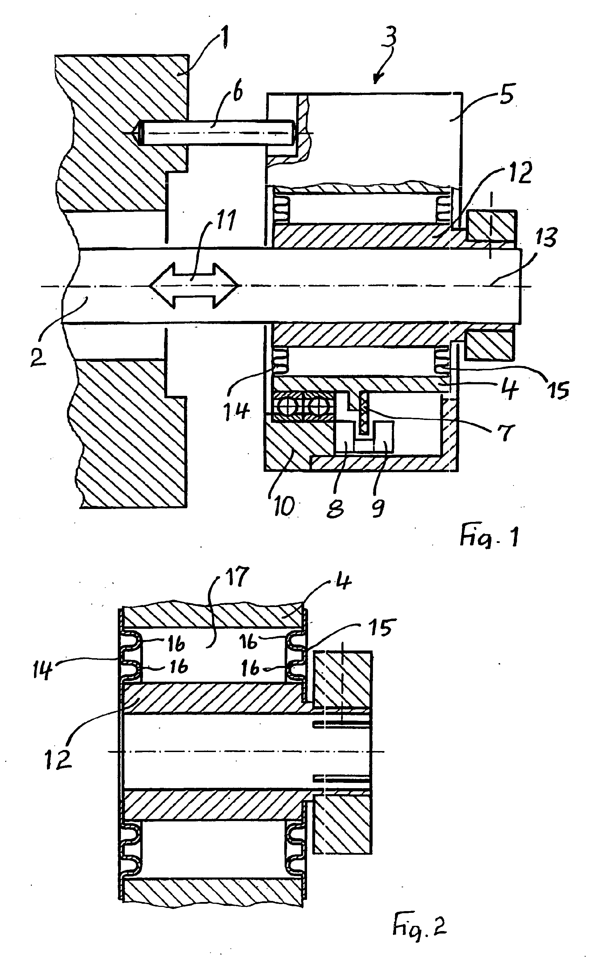

In Figur 1 ist 1 das Gehäuse einer Maschine, deren Arbeitswelle 2 durch einen Drehgeber 3 mit einer Hohlwelle 4 überwacht werden soll. Das aus zwei Teilen bestehende Gehäuse 5 des Drehgebers 3 ist in bekannter Weise über eine Drehmomentstütze 6 mit dem Gehäuse 1 der Maschine verbunden. Die Drehmomentstütze 6 verhindert ein Mitdrehen des Drehgebers 3 mit der Arbeitswelle 2 und der fest mit dieser verbundenen Hohlwelle 4.

Auf der Hohlwelle 4 ist in bekannter Weise eine Inkrementalscheibe 7 befestigt, die mit ihrem Umfang in den Bereich einer Abtastvorrichtung 8, 9 ragt, die mit einem Teil 10 des Gehäuses 5 verbunden ist.

Um die Übertragung von durch den Pfeil 11 angedeuteten, axialen Schockbelastungen auf die Hohlwelle 4, wie sie beim Einfallen von Stillstandsbremsen auftreten, zu verhindern, ist in der Hohlwelle 4 ein Koppelglied 12 angeordnet, das von einer mit Klemmzungen versehene Buchse gebildet wird, die über in Richtung der Längsachse 13 des Koppelgliedes 12 und der Antriebswelle 2 längselastische Ringscheiben 14, 15 mit der Hohlwelle 4 verbunden ist.

Mehrere Ausführungsformen von Ringscheiben und die Art ihrer Verbindung mit der Hohlwelle 4 und dem Koppelglied 12 sind in den Figuren 2 bis 4 dargestellt.

Die Figur 2 zeigt in vergrößertem Maßstab die bei dem Drehgeber gemäß Figur 1 verwendeten Ringscheiben 14, 15. Wie man sieht, sind die Ringscheiben 14, 15 mit jeweils zwei Sicken 16 versehen, die in das Innere eines von der Hohlwelle 4 und dem Koppelglied 12 begrenzten Hohlraumes 17 ragen. Die Befestigung der Ringscheiben 14, 15 an den Stirnflächen der Hohlwelle 4 und des Koppelgliedes 12 kann auf verschiedene Weise wie z. B. durch Kleben, Schweißen oder Verschrauben erfolgen.

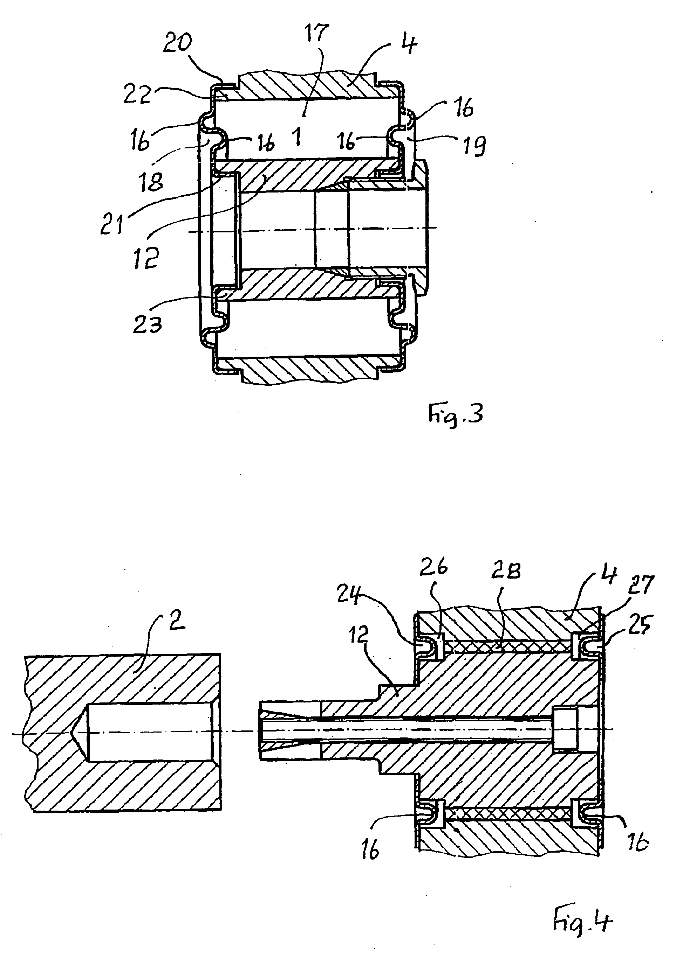

Bei der Ausführungsform gemäß Figur 3 werden Ringscheiben 18, 19 verwendet, die ebenfalls zwei Sicken 16 aufweisen, von denen jedoch anders als im Fall der Figur 2 jeweils eine nach außen und eine nach innen ragt. Abweichend von der in Figur 2 gewählten Befestigung an den Stirnflächen der Hohlwelle 4 und des Koppelgliedes 12 übergreifen hier Ringbunde 20, 21 der Ringscheiben 18, 19 Ringstege 22, 23, die im Bereich der Stirnseite der Hohlwelle 4 und des Koppelgliedes 12 angeordnet sind.

In Figur 4 ist schließlich eine Lösung dargestellt, bei der Ringscheiben 24, 25 mit nur jeweils einer Sicke 16 zum Einsatz gelangen. Die Sicken 16 ragen hier in Nuten 26, 27, die von der Hohlwelle 4, dem hier von einer Spreizwelle gebildeten Koppelglied 12 und einer den Zwischenraum zwischen der Hohlwelle 4 und dem Koppelglied 12 ausfüllenden Gleithülse 28 begrenzt werden. Die Gleithülse 28 besteht vorzugsweise aus Teflon. Bei einer vollflächigen Verbindung der Ränder der Ringscheiben 24, 25 mit der Hohlwelle 4 und dem Koppelglied 12 kann in dem auf diese Weise hermetisch abgeschlossenen und mithin gegen Verschmutzungen geschützten Zwischenraum zwischen der Hohlwelle 4 und dem Koppelglied 12 anstelle der Gleithülse 28 auch ein Schmierfilm vorgesehen werden.

## Patentansprüche

1. Drehgeber mit einer Hohlwelle, die drehbar in einem Gehäuse gelagert ist, in dem ein Abtastkopf und eine mit der Hohlwelle verbundene Inkrementalscheibe angeordnet sind, sowie mit einem von der Hohlwelle umschlossenen Koppelglied, durch das die Hohlwelle mit einer zu überwachenden Welle verbindbar ist, **dadurch gekennzeichnet, dass** die Hohlwelle (4) das von ihr umschlossene Koppelglied (12) mit Spiel umschließt und dass Stirnflächen der Hohlwelle (4) und des Koppelgliedes (12) über in Richtung der Längsachse (13) des Koppelgliedes (12) federelastische Ringscheiben (14, 15; 18, 19 ; 24, 25) miteinander verbunden sind.

2. Drehgeber nach Anspruch 1, **dadurch gekennzeichnet, dass** die Ringscheiben (14, 15; 18, 19; 24, 25) im Bereich einer im Abstand von ihren Außen- und Innenrändern angeordneten Ringzone mindestens eine kreisförmige Sicke (16) aufweisen.

3. Drehgeber nach Anspruch 1 oder 2, **dadurch gekennzeichnet, dass** sich zwischen der Hohlwelle (4) und dem Koppelglied (12) ein Hohlraum (17) befindet.

4. Drehgeber nach Anspruch 3, **dadurch gekennzeichnet, dass** der Hohlraum (17) durch eine Gleithülse (28) ausgefüllt ist.

5. Drehgeber nach Anspruch 4, **dadurch gekennzeichnet, dass** die Stirnseiten der Hohlwelle (4), der Gleithülse (28) und des Koppelgliedes (12) jeweils gemeinsam eine Nut (26, 27) zur Aufnahme einer oder mehrerer Sicken (16) der Ringscheiben (24, 25) bilden.

6. Drehgeber nach Anspruch 3, **dadurch gekennzeichnet, dass** der Hohlraum (17) durch einen Schmierfilm ausgefüllt ist.

7. Drehgeber nach einem der Ansprüche 1 bis 6, **dadurch gekennzeichnet, dass** das Koppelglied (12) von einer Klemmbuchse für die zu überwachende Welle (2) gebildet wird.

8. Drehgeber nach einem der Ansprüche 1 bis 6, **dadurch gekennzeichnet, dass** das Koppelglied (12) von einer Spreizwelle gebildet wird.
